# EUROPÄISCHE PATENTSCHRIFT

(11) **EP 0 436 143 B1**
(45) Veröffentlichungstag und Bekanntmachung des Hinweises auf die Patenterteilung: **20.04.1994**
(21) Anmeldenummer: 90123522.6
(22) Anmeldetag: 07.12.1990
(51) Int. Cl.: C04B 41/82, C04B 35/52

(54) **Verfahren zum Imprägnieren und Tempern von kohlenstoffhaltigen Rohlingen**
Method of impregnating and heat-treating carbonaqueous material
Méthode pour imprégner et recuire des produits carbonés

(30) Priorität: 20.12.1989 DE 3941979
(43) Veröffentlichungstag der Anmeldung: 10.07.1991
(73) Patentinhaber: Feist Intertec AG, CH-2502 Biel (CH)
(72) Erfinder: Feist, Horst J., Ing. grad., W-6969 Hardheim (DE)
(74) Vertreter: Clemens, Gerhard, Dr.-Ing.

(56) Entgegenhaltungen:
- EP-A- 0 053 718
- EP-A- 0 080 534
- FR-A- 1 291 699
- FR-A- 2 348 453
- GB-A- 1 010 032
- GB-A- 1 018 930
- GB-A- 2 049 751

## Beschreibung

Die Erfindung betrifft ein Verfahren zum Imprägnieren von kohlenstoffhaltigen Rohlingen, aus denen oberhalb einer ersten Grenztemperatur Tg1 von etwa 400°C (Grad Celsius) unter Normaldruck = 10⁵Pa (Pascal) Kohlenwasserstoff und/oder andere schädliche Gase ausgasen, und anschließendem Tempern der imprägnierten Rohlinge, insbesondere zur Herstellung feuerfester Steine, Graphitelektroden und dergleichen, unter Einsatz von Pech oder dergleichen kohlenstoffhaltigem Imprägniermittel, das oberhalb einer zweiten Grenztemperatur Tg 2 von etwa 300°C unter Normaldruck = 10⁵Pa Kohlenwasserstoff und/oder andere schädliche Gase ausgast, bei dem die Rohlinge kalt, nämlich mit einer Temperatur, die niedriger ist, als die erste Grenztemperatur Tg1, in einen Autoklav gebracht werden und im geschlossenen Autoklav in einer Inertgasumgebung imprägniert werden, indem sie auf die Imprägniertemperatur Ti aufgeheizt werden, die unter der Verkokungstemperatur Tv, bei der die Verkokung des Imprägniermittels unter dem jeweils herrschenden Betriebsdruck Pb beginnt, liegt und bei der Imprägniertemperatur Ti einem Vakuum Pu ausgesetzt, mit durch Erhitzen flüssig gemachtem Imprägniermittel überflutet und dann mit eingeströmtem Inertgas unter Druck gesetzt werden, bei dem nach erfolgter Imprägnierung das überschüssige Imprägniermittel aus dem Autoklav abgezogen wird, bei dem der Autoklav erst wieder geöffnet wird, nachdem die Rohlinge auf eine Temperatur nicht höher als die Grenztemperatur Tg abgekühlt sind, wobei die Grenztemperatur Tg so groß ist wie die niedrigste der beiden Grenztemperaturen Tg1 und Tg2 und bei dem ein Autoklav eingesetzt wird, der bis zu einem inneren Höchstdruck Ph im Dauerbetrieb belastbar ist.

Aus der EP-A-53 718 und der FR-A-2 348 453 sind Verfahren zum Imprägnieren von kohlenstoffhaltigen Rohlingen bekannt, bei denen Imprägnier- und Verkokungsschritt in einem Zuge im Autoklaven durchgeführt werden.

Aufgabe der Erfindung ist es, den durch die Abkühlung nach dem Imprägnieren und die erforderliche Wiederaufheizung zum Tempern entstehenden Energieaufwand möglichst klein zu halten, außerdem sicherzustellen, daß während der ganzen Imprägnieren und Tempern umfassenden Behandlung austretende schädliche Gase auf einfache kontrolliert entsorgt werden können und gleichzeitig Rohlinge hergestellt werden können, die einen hohen Verkokungsgrad aufweisen.

Die Erfindung löst diese Aufgabe dadurch, daß ein Autoklav eingesetzt ist, der innen inert beheizbar ist, fließfähiges, überschüssiges Imprägniermittel nach Beendigung des Imprägnierens und vor Beginn des Temperns bei geschlossenem Autoklav mit Hilfe entsprechender druckdicht verlegter Leitungen aus den Wannen und aus dem Autoklav abgeleitet wird, nach Abziehen des Imprägniermittels die imprägnierten Rohlinge getempert und anschließend mindestens bis auf die Grenztemperatur Tg abgekühlt werden, wobei, abgesehen von der Zu- und Abfuhr des Imprägniermittels und dosierter Gasmengen zur Druckeinstellung, der Autoklav geschlossen bleibt, von dem Moment an, in dem bei Beginn der Imprägnierens die Rohlinge über die erste Grenztemperatur Tg1 hinaus aufgeheizt werden bis zu dem Moment, in dem nach dem Ende des Temperns die getemperten Rohlinge wieder auf eine Temperatur nicht höher als die Grenztemperatur Tg abgekühlt sind, nach Beendigung des Imprägnierens und vor Beginn des Temperns Inertgas eingefüllt wird zu einem Startdruck Ps, der so bemessen ist, daß bei Tempertemperatur Tt ein Betriebsdruck Pb erreicht ist, der fast in der Höhe des Höchstdrucks Ph liegt und die vor Beginn des Temperns eingefüllte Inertgasfüllung so bemessen ist, daß bereits bei Erreichen einer Schwelltemperatur Ts, die zwischen der Tempertemperatur Tt und der Verkokungstemperatur Tv liegt, vorzugsweise bereits bei Erreichen dieser Verkokungstemperatur Tv, der endgültige Betriebsdruck Pb erreicht ist und dann durch Ablassen überschüssigen Inertgases bis zum Erreichen der Tempertemperatur Tt konstant aufrechterhalten wird.

Da das Imprägnieren und Tempern in ein und demselben Autoklav erfolgt und die Rohlinge während der ganzen Behandlung in diesem Autoklav verbleiben, ist es nicht nötig, die Temperatur nach dem Imprägnieren und vor dem Tempern bis auf unterhalb der Grenztemperatur Tg abzusenken. Dadurch wird der Energieaufwand für eine erforderliche Wiederaufheizung zum Tempern eingespart.

Da die Rohlinge während der ganzen, das Imprägnieren und Tempern umfassenden Behandlung im Autoklav verbleiben und außerhalb des Autoklavs kalt sind, gasen nennenswerte Mengen von schädlichen Gasen auch nur innerhalb des Autoklavs aus und können von dort kontrolliert entsorgt werden.

Sauerstoff kann die warme Oberfläche der Rohlinge oxydieren, so daß die fertig getemperten Rohlinge oberflächlich unbrauchbar sind. Man kann die betreffende oxydierte Oberflächenschicht am fertig getemperten Rohling abtragen, aber das führt einerseits zu Verlust und andererseits zu neuen Abmessungen und das kann man dann nicht hinnehmen, wenn es sich bei dem Rohling um maßlich exakt vorgefertigte Steine oder dergleichen handelt.

Bei dem erfinderischen Verfahren befinden sich die Rohlinge während der ganzen Behandlung in einer Inertgasatmosphäre, wodurch oberflächliche Oxydation unterbunden wird. Wenn die Rohlinge unterhalb der Grenztemperatur Tg nach dem Tempern aus dem Autoklav entnommen und der sauerstoffhaltigen Luft ausgesetzt werden, reicht die Oberflächentemperatur nicht mehr für die unerwünschte Oxydation aus.

Nach dem Abschluß des Imprägnierens und bis zum Beginn der für das anschließende Tempern erforderliche Aufheizung wird im Inneren des Autoklavs die Imprägniertemperatur Ti vorzugsweise im wesentlichen aufrechterhalten, um unnötige Energieaufwendungen zu vermeiden. Einen Temperaturabfall der Rohlinge um mehr als 50°C sollte man dabei nach Möglichkeit vermeiden. Ein solcher Temperaturabfall könnte sich bei der Umrüstung zum Tempern ergeben durch Einfüllen neuen Inertgases, wenn die Heizung abgestellt oder gedrosselt wird oder wenn das Imprägniermittel aus den Wannen abgeleitet wird.

Als Inertgas wird vorzugsweise Stickstoff eingesetzt, das preisgünstig zur Verfügung steht.

Beim erfinderischen Verfahren erfolgt das Tempern unter Druck. Dadurch kann derjenige Anteil des Imprägniermittels, der beim Tempern innerhalb des Rohlings verkokt, also zu der Schadstoffbildung nicht mehr beitragen kann, gegenüber sonst gleichen Temperbedingungen erhöht werden. Wenn man mit der Imprägnierung eine vorgegebene Verkokung innerhalb des Rohlings erzielen will, wird durch die erhöhte Verkokungsrate innerhalb des Rohlings auch die Menge des einzusetzenden Imprägniermittels herabgesetzt. Das spart Kosten und wirkt zusätzlich im Sinne der zugrundeliegenden Aufgabenstellung.

Da die angestrebte Innenverkokung umso höher ist, je höher der Temperdruck ist, werden die diesbezüglichen Möglichkeiten des gegebenen Autoklavs ausgenutzt. Das geschiet dadurch, daß nach Beendigung des Imprägnierens und vor Beginn des Temperns Inertgas eingefüllt wird zu einem Startdruck Ps, der so bemessen ist, daß bei Tempertemperatur Tt ein Betriebsdruck Pb erreicht ist, der fast in der Höhe des Höchstdrucks Ph liegt.

In diesem Fall wird der maximale Betriebsdruck erst erreicht mit der Tempertemperatur und bleibt während der Haltezeit, während derer das Autoklav-Innere auf Tempertemperatur gehalten wird, erhalten. Aber in der Zeitspanne, die es braucht, um die Tempertemperatur zu erreichen, findet auch schon Verkokung statt, allerdings in diesem Fall unter einem niedrigeren Betriebsdruck, weil sich der maximale Betriebsdruck noch nicht aufgebaut hat.

Man erzielt aus diesem Grunde eine weitere Erhöhung der Innenverkokungsrate dadurch, daß die Inertgaseinfüllung, vorzugsweise die vor dem Tempern eingefüllte Inertgasfüllung, so bemessen ist, daß bereits bei Ereiner Schwelltemperatur Ts, die zwischen der Tempertemperatur Tt und der Verkokungstemperatur Tv, bei der die Verkokung des Imprägniermittels unter dem jeweils herrschenden Betriebsdruck Pb beginnt, vorzugsweise bereits bei Erreichen dieser Verkokungstemperatur Tv, der endgültige Betriebsdruck Pb erreicht ist und dann durch Ablassen überschüssigen Inergases bis zum Erreichen der Tempertemperatur Tt konstant aufrechterhalten wird.

Zum Aufbau des Druckes bedarf es keiner besonderen aufwendigen Maßnahmen. Wenn der geschlossene, kalte Autoklav mit Prozeßgas auf einenm Startdruck Ps von beispielsweise 10⁵Pa gefüllt ist, dann ergibt sich mit zunehmender Tempertemperatur ohne weiteres Zutun ein erwünschter Druckanstieg. Den auf diese Weise bei der Tempertemperatur Tt erreichten Betriebsdruck kann man dadurch erhöhen, daß man von einem hohen Startdruck Ps ausgeht und/oder während des Temperns zusätzliches Inertgas in den Autoklav eindrückt. Entsprechend kann man, wenn sich auf diese Weise zu hoher Druck einstellt, auch überschüssiges Prozeßgas ablassen, das man dann allerdings kontrolliert entsorgen sollte.

Beim erfinderischen Verfahren ist der Bedarf an Inertgas im Gegensatz zu bekannten Verfahren, bei denen während des Temperns immer neues Prozeßgas an den Rohlingen vorbeigespült wird, verhältnismäßig gering, so daß auch der Einsatz eines kostspieligeren Inertgases gerechtfertig sein kann.

Es empfiehlt sich schon aus Sicherheitsgründen, daß der Innendruck des Autoklavs ständig überwacht wird und eine Überschreitung des zulässigen HÖchstdruckes Ph beziehugnsweise eines vorgegebenen, darunter liegenden maximalen Betriebsdruckes Pb durch dosiertes Ablassen von Inertgas verhindert wird.

Die mit den Schadstoffen beladenen Prozeßgase, die abgelassen werden, zum Beispiel zum Überdruck-Abbau während des Temperns oder zum Druckausgleich vor dem Öffnen des Autoklavs oder aber als verbleibende Füllung des geöffneten Autoklavs, werden vorzugsweise durch thermische Nachverbrennung gereinigt, ehe sie an die Umwelt abgegeben oder weiterverwendet werden.

Es empfiehlt sich, die Prozeßgase, soweit nicht zur Drucksteuerung Teile vorzeitig abgelassen werden müssen, bis zur Erkaltung im Autoklav zu belassen, um dadurch die ausgedampften Schadstoffe durch Kondensation abzuscheiden, ehe der Autoklav geöffnet wird. Auf diese Weise wird die Beladung der dann freiwerdenden Prozeßgase reduziert und das Kondensat kann zur Weiterverarbeitung eingesammelt werden.

Es werden sehr hohe Innenverkokungsraten erzielt, wenn, wie vorzugsweise vorgesehen, der Betriebsdruck Pb bei Tempertemperatur Tt zwischen 10⁶ und 10⁸ Pa, vorzugsweise zwischen 10⁶ und 10⁷ Pa, liegt. Im einzelnen sind Innenverkokungsraten erzielbar, bezogen auf das Gewicht, von über 70 % bei einem Betriebsdruck Pb bei Tempertemperatur Tt von 10⁶ Pa. Bei 10⁷ Pa sind sogar Innenverkokungsraten von über 80 % erzielbar.

Die Erfindung wird nun anhand von Beispielen näher erläutert.

### VERFAHRENSBEISPIEL 1

Formgerecht vorgepreßte Rohlinge für feuerfeste Steine aus M1 = Kokspulver werden auf T1 = 150°C vorgewärmt in oben offene Wannen gefüllt und die Wannen werden in einen Autoklav eingestellt. Zum Einstellen werden die Wannen mit einem Fahrgestell in den Autoklav hineingefahren und das Fahrgestell wird anschließend wieder herausgeholt.

Die Grenztemperaturen dieser Rohlinge betragen Tg1 = 300°C, Tg2 = 290°C. Tg ist also höher als T1. Die zulässige Innendruckbelastung des eingesetzten Autoklavs beträgt Ph = 10⁶ Pa.

Der Autoklav wird dann druckdicht verschlossen und auf Pv1 = 7000 Pa evakuiert und dann mit Inertgas M2 = Stickstoff unter einem Startdruck Ps1 = 10⁵ Pa gefüllt. Dann werden die Rohlinge mit einer innerhalb des Autoklavs angeordneten elektrischen Heizung auf die Imprägniertemperatur Ti = 300°C aufgeheizt und dann wird der Autoklav auf Pv2 = 7000 Pa evakuiert. Nun wird als Imprägniermittel M3 = Steinkohlenpech, das auf die Pechtemperatur Tp = 250°C aufgeheizt ist, von außen über absperrbare, druckdicht durch die Autoklavwand hindurchgeführte, im Bodenbereich der Wannen mündende Leitungen in die Wannen eingelassen, bis die darin befindlichen Rohlinge vollständig von dem flüssigen Imprägniermittel überspült sind. Die Pechtemperatur Tp liegt um eine Differenztemperatur Td = 50°C unterhalb der Imprägniertemperatur Ti.

In den Autoklav wird nun erneut Inertgas M2 eingelassen bis zu einem Betriebsdruck Pb1 = 1,5 x 10⁶ Pa. Dieser Betriebsdruck Pb1 und die Imprägniertemperatur Ti werden für eine Imprägnierzeit Z1 = 2 Stunden aufrechterhalten. Anschließend wird das Imprägniermittel über die genannten Leitungen abgelassen.

Die nun imprägnierten Rohlinge bestehen aus A1 = 20 Gewichtsprozent M4 = Steinkohlenpech als Imprägniermittel und A2 = 80 Gewichtsprozent M5 = Kokspulver.

Durch Eindrücken von zusätzlichem Inertgas M2 oder Ablassen von Prozeßgas wird das Innere des Autoklavs auf einen für das Tempern vorgesehenen Startdruck Ps2 = 2 x 10⁵ Pa eingestellt. Dann wird mittels der bereits erwähnten, innerhalb des Autoklavs angeordneten Heizung das Innere des Autoklavs bis auf die Tempertemperatur Tt = 740°C aufgeheizt. Diese Tempertemperatur Tt ist nach Z2 = 30 Stunden Heizzeit erreicht. Dabei hat sich der Betriebsdruck Pb durch die Temperaturerhöhung und durch ausgasende Abscheidungen erhöht auf Pb2 = 7 x 10⁵ Pa.

Dieser Betriebsdruck Pb und die Tempertemperatur Tt werden während Z3 = 8 Stunden aufrechterhalten. Dann wird die Beheizung abgeschaltet und das Innere des Autoklavs kann abkühlen. Nach Z4 = 50 Stunden ist im Inneren des Autoklavs die Temperatur auf T2 = 250°C abgefallen. Der Druck des Prozeßgases ist dabei gleichzeitig auf P1 = 3,3 x 10⁵ Pa abgesunken.

Es wird nun durch dosiertes Ablassen von überschüssigem Prozeßgas Druckausgleich geschaffen und der Autoklav wird dann geöffnet und die fertig getemperten Rohlinge werden entnommen. Sie bestehen jetzt zu 100 % aus Kokspulver. Aus dem Gewichtsverlust gegenüber dem Ausgangsgewicht errechnet sich eine Innenverkokungsrate des Pechs von D1 = 52 Gewichtsprozent.

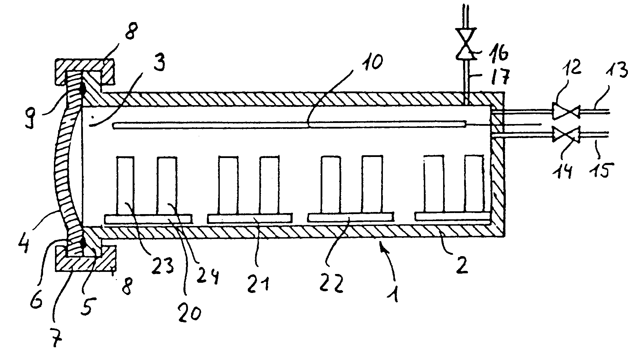

Die Zeichnung zeigt einen innendruckbelastbaren Autoklav 1, der in Verbindung mit den Ausführungsbeispielen einsetzbar ist. Das langgestreckte Gehäuse des Autoklavs ist mit 2 bezeichnet. Dieses Gehäuse 2 ist am einen Ende geschlossen und am anderen Ende hat es eine Öffnung 3, die durch einen aufgesetzten Deckel 4 verschließbar ist. Die Öffnung 3 ist von einem kreisrunden Flansch 5 umgeben, auf den ein Flansch 6 des Deckels 4 formschlüssig paßt. Die beiden Flansche 5 und 6 werden in geschlossenem Zustand durch aufgesetzte Krallen 7 und 8 zusammengehalten. Zwischen den beiden Flanschen 5 und 6 befindet sich ein Dichtring 9, der hydraulisch aufblasbar ist.

Das Betätigen der Krallen 7 und 8 erfolgt mit einer hydraulischen Einrichtung, deren Betätigung dahingehend gesichert ist, daß der Verschluß nur geöffnet werden kann nach erfolgtem Druckausgleich des Autoklav-Inneren zur Umgebung.

Innerhalb des Autoklavs ist eine von außen bedienbare elektrische Heizung 10 angeordnet. In den Autoklav mündet ein durch ein Ventil 12 absperrbarer Abblasstutzen 13, ein durch ein Ventil 14 absperrbarer Einblasstutzen 15 und ein mit einem Sicherheitsventil 16 ausgestatteter Überdruckausblasstutzen 17.

Innerhalb des Autoklavs sind oben offene Wannen 20, 21, 22 abgestellt, in die zu tempernde Rohlinge 23, 24 ... eingestellt sind. Für jede Wanne ist eine druckdicht durch die Autoklavwand hindurchgeführte Leitung 30, 31, 32 vorgesehen, die durch ein Ventil 33, 34, 35 von außen absperrbar ist. Die Leitungen 30, 31, 32 münden am jeweils tiefsten Punkt in die zugehörigen Wannen 20, 21, 22.

In den Leitungen 30, 31, 32 sind innerhalb des Autoklavs Kupplungen 36, 37, 38 vorgesehen, die lösbar sind und gelöst werden, wenn die Wannen zum Beispiel mit einem nicht dargestellten Fahrgestell aus dem Autoklav herausgefahren werden, und wieder angeschlossen werden, wenn die Wannen in ihrer Betriebsposition im Autoklav stehen. Das Fahrgestell wird nur zum Ein- und Ausfahren der Wannen eingesetzt und wird vor Schließen des Autoklavs aus dem Autoklav herausgenommen.

## Patentansprüche

1. Verfahren zum Imprägnieren von kohlenstoffhaltigen Rohlingen, aus denen oberhalb einer ersten Grenztemperatur Tg1 von etwa 400°C (Grad Celsius) unter Normaldruck = 10⁵Pa (Pascal) Kohlenwasserstoff und/oder andere schädliche Gase ausgasen, und anschließendem Tempern der imprägnierten Rohlinge, insbesondere zur Herstellung feuerfester Steine, Graphitelektroden und dergleichen, unter Einsatz von Pech oder dergleichen kohlenstoffhaltigem Imprägniermittel, das oberhalb einer zweiten Grenztemperatur Tg2 von etwa 300°C unter Normaldruck = 10⁵Pa Kohlenwasserstoff und/oder andere schädliche Gase ausgast,
bei dem die Rohlinge kalt, nämlich mit einer Temperatur, die niedriger ist, als die erste Grenztemperatur Tg1, in einen Autoklav gebracht werden und im geschlossenen Autoklav in einer Inertgasumgebung imprägniert werden, indem sie auf die Imprägniertemperatur Ti aufgeheizt werden, die unter der Verkokungstemperatur Tv, bei der die Verkokung des Imprägniermittels unter dem jeweils herrschenden Betriebsdruck Pb beginnt, liegt und bei der Imprägniertemperatur Ti einem Vakuum Pu ausgesetzt, mit durch Erhitzen flüssig gemachtem Imprägniermittel überflutet und dann mit eingeströmtem Inertgas unter Druck gesetzt werden,
bei dem nach erfolgter Imprägnierung das überschüssige Imprägniermittel aus dem Autoklav abgezogen wird,
bei dem der Autoklav erst wieder geöffnet wird, nachdem die Rohlinge auf eine Temperatur nicht höher als die Grenztemperatur Tg abgekühlt sind, wobei die Grenztemperatur Tg so groß ist wie die niedrigste der beiden Grenztemperaturen Tg1 und Tg2 und
bei dem ein Autoklav eingesetzt wird, der bis zu einem inneren Höchstdruck Ph im Dauerbetrieb belastbar ist, dadurch gekennzeichnet, daß
ein Autoklav eingesetzt ist, der innen inert beheizbar ist,
- fließfähiges, überschüssiges Imprägniermittel nach Beendigung des Imprägnierens und vor Beginn des Temperns bei geschlossenem Autoklav mit Hilfe entsprechender druckdicht verlegter Leitungen aus Wannen und aus dem Autoklav abgeleitet wird,
- nach Abziehen des Imprägniermittels die imprägnierten Rohlinge getempert und anschließend mindestens bis auf die Grenztemperatur Tg abgekühlt werden, wobei, abgesehen von der Zu- und Abfuhr des Imprägniermittels und dosierter Gasmengen zur Druckeinstellung, der Autoklav geschlossen bleibt, von dem Moment an, in dem bei Beginn der Imprägnierens die Rohlinge über die erste Grenztemperatur Tg1 hinaus aufgeheizt werden bis zu dem Moment, in dem nach dem Ende des Temperns die getemperten Rohlinge wieder auf eine Temperatur nicht höher als die Grenztemperatur Tg abgekühlt sind,
- nach Beendigung des Imprägnierens und vor Beginn des Temperns Inertgas eingefüllt wird zu einem Startdruck Ps, der so bemessen ist, daß bei Tempertemperatur Tt ein Betriebsdruck Pb erreicht ist, der fast in der Höhe des Höchstdrucks Ph liegt und
- die vor Beginn des Temperns eingefüllte Inertgasfüllung so bemessen ist, daß bereits bei Erreichen einer Schwelltemperatur Ts, die zwischen der Tempertemperatur Tt und der Verkokungstemperatur Tv liegt, vorzugsweise bereits bei Erreichen dieser Verkokungstemperatur Tv, der endgültige Betriebsdruck Pb erreicht ist und dann durch Ablassen überschüssigen Inertgases bis zum Erreichen der Tempertemperatur Tt konstant aufrechterhalten wird.

2. Verfahren nach Anspruch 1, dadurch gekennzeichnet,
daß nach Abschluß des Imprägnierens im Inneren des Autoklavs die Imprägniertemperatur Ti im wesentlichen aufrechterhalten und zur Tempertemperatur Tt angehoben wird.

3. Verfahren nach einem der vorhergehenden Ansprüche, dadurch gekennzeichnet,
daß zur Druckbelastung während des Imprägnierens und/oder Temperns als Inertgas vorzugsweise Stickstoff in den Autoklav eingedrückt wird.

4. Verfahren nach einem der vorhergehenden Ansprüche, dadurch gekennzeichnet,
daß der Innendruck des Autoklavs ständig überwacht wird und eine Überschreitung des Höchstdrucks Ph beziehungsweise eines vorgegebenen darunter liegenden maximalen Betriebsdrucks Pb durch dosiertes Ablassen von Inertgas verhindert wird.

5. Verfahren nach einem der vorhergehenden Ansprüche, dadurch gekennzeichnet,
daß die Beladung der Prozeßgase aus beim Imprägnieren und Tempern ausgedampften Anteilen des Imprägniermittels im Anschluß an das Tempern im wesentlichen durch Kondensation abgeschieden werden, ehe der Autoklav geöffnet wird.

## Claims

1. Process for impregnating carbon-containing moulded blanks, from which, above a first limit temperature Tg1 of about 400°C (degrees Celsius) at atmospheric pressure = 10⁵ Pa (Pascal), hydrocarbon and/or other hazardous gases outgas, and for the subsequent heating of the impregnated moulded blanks, in particular for producing refractory bricks, graphite electrodes and the like, using pitch or like carbon-containing impregnating agent which, above a second limit temperature Tg2 of about 300°C at atmospheric pressure = 10⁵ Pa, outgasses hydrocarbon and/or other hazardous gases,
in which the moulded blanks are placed into an autoclave cold, namely at a temperature which is lower than the first limit temperature Tg1, and are impregnated in the closed autoclave in an inert gas environment, by heating them to the impregnation temperature Ti, which is below the carbonization temperature Tv at which carbonization of the impregnating agent begins at the respective prevailing operating pressure Pb, and exposing them at the impregnation temperature Ti to a vacuum Pu, flooding them with impregnating agent made liquid by heating and then placing them under pressure with injected inert gas,
in which, after impregnation has been carried out, the excess impregnating agent is taken off from the autoclave,
in which the autoclave is only reopened after the moulded blanks have cooled to a temperature no higher than the limit temperature Tg, the limit temperature Tg being as high as the lowest of the two limit temperatures Tg1 and Tg2 and
in which an autoclave is used which can be loaded in constant operation to a maximum internal pressure Ph, characterized in that
an autoclave is used which can be heated internally under inert conditions,
- flowable, excess impregnating agent, after completing the impregnation and before beginning the heating, is drained off from troughs and the autoclave, with the autoclave closed with the aid of appropriate pressure-tightly installed pipes,
- after taking off the impregnating agent, the impregnated moulded blanks are heated and then cooled at least to the limit temperature Tg, the autoclave remaining closed, apart from the feed and discharge of the impregnating agent and metered amounts of gas for establishing pressure, from the moment at which, at the beginning of the impregnation, the moulded blanks are heated above the first limit temperature Tg1 until the moment at which, after the end of the heating, the heated moulded blanks are again cooled to a temperature no higher than the limit temperature Tg,
- after completing the impregnation and before beginning the heating, inert gas is charged to give a starting pressure Ps, which is dimensioned so that at a heating temperature Tt, an operating pressure Pb is reached which is almost as high as the maximum pressure Ph and
- the inert gas admission charged before beginning the heating is dimensioned so that the final operating pressure Pb is already reached on reaching a threshold temperature Ts which is between the heating temperature Tt and the carbonization temperature Tv, and is preferably already reached on reaching this carbonization temperature Tv, and then, by discharging excess inert gas, the operating pressure Pb is kept constant until the heating temperature Tt is reached.

2. Process according to Claim 1, characterized in that
after completing the impregnation in the interior of the autoclave, the impregnation temperature Ti is essentially maintained and increased to the heating temperature Tt.

3. Process according to one of the preceding claims, characterized in that,
for pressurization during the impregnation and/or heating, the inert gas forced into the autoclave is preferably nitrogen.

4. Process according to one of the preceding claims, characterized in that
the internal pressure of the autoclave is constantly monitored and overshooting the maximum pressure Ph or a preset maximum operating pressure Pb below this is prevented by metered discharge of inert gas.

5. Process according to one of the preceding claims, characterized in that
the loading of the process gases with portions of the impregnating agent evaporated off during impregnation and heating is separated off essentially by condensation subsequent to the heating, before the autoclave is opened.

## Revendications

1. Procédé pour imprégner des pièces brutes carbonées dont un hydrocarbure et/ou d'autres gaz nocifs se dégagent au-dessus d'une première température limite Tg1 d'environ 400°C (degrés Celsius) sous une pression normale = 10⁵ Pa (pascals), et pour recuire ensuite les pièces brutes imprégnées, en particulier pour la fabrication de pierres réfractaires, d'électrodes en graphite et pièces similaires, en utilisant de la poix ou un agent d'imprégnation carboné similaire, qui libère un hydrocarbure et/ou d'autres gaz nocifs au-dessus d'une seconde température limite Tg2 d'environ 300°C sous une pression normale = 10⁵ Pa ;
procédé dans lequel les pièces brutes sont placées dans un autoclave à l'état froid, c'est-à-dire à une température plus basse que la première température limite Tg1, et sont imprégnées dans un environnement de gaz inerte dans l'autoclave fermé, en étant chauffées jusqu'à la température d'imprégnation Ti inférieure à la température de cokéfaction Tv, à laquelle la cokéfaction de l'agent d'imprégnation débute sous la pression de service Pb régnant respectivement, pour être ensuite soumises à une dépression Pu à la température d'imprégnation Ti, inondées par de l'agent d'imprégnation fluidifié par chauffage, puis mises sous pression par un gaz inerte admis ;
dans lequel l'agent d'imprégnation excédentaire est soutiré de l'autoclave à l'issue de l'imprégnation ;
dans lequel l'autoclave n'est de nouveau ouvert qu'après que les pièces brutes sont refroidies jusqu'à une température n'excédant pas la température limite Tg, la température limite Tg étant égale à la plus basse des deux températures limites Tg1 et Tg2 ; et
dans lequel on utilise un autoclave pouvant être sollicité, en mode continu, jusqu'à une pression maximale interne Ph, caractérisé par le fait
- qu'on utilise un autoclave pouvant être chauffé intérieurement en mode inerte ;
- que, après l'achèvement de l'imprégnation et avant le début du recuit, l'autoclave étant fermé, de l'agent d'imprégnation excédentaire coulant est évacué de bacs et de l'autoclave, à l'aide de conduites correspondantes installées avec étanchéité à la pression ;
- que, à l'issue du soutirage de l'agent d'imprégnation, les pièces brutes imprégnées sont recuites et sont ensuite refroidies au moins jusqu'à la température limite Tg, auquel cas, abstraction faite de l'admission et de l'évacuation de l'agent d'imprégnation et de quantités de gaz dosées, en vue du réglage de la pression, l'autoclave demeure fermé à partir de l'instant auquel, au début de l'imprégnation, les pièces brutes sont portées au-delà de la première température limite Tg1, jusqu'à l'instant auquel, après l'expiration du recuit, les pièces brutes recuites sont à nouveau refroidies jusqu'à une température n'excédant pas la température limite Tg ;
- que, après l'achèvement de l'imprégnation et avant le début du recuit, un gaz inerte est introduit lorsque règne une pression initiale Ps étudiée de manière qu'on obtienne, à une température de recuit Tt, une pression de service Pb équivalant presque à la pression maximale Ph ; et
- que le volume de gaz inerte introduit avant le début du recuit est étudié de manière que, dès qu'est atteinte une température de seuil Ts comprise entre la température de recuit Tt et la température de cokéfaction Tv, de préférence dès que cette température de cokéfaction Tv est atteinte, la pression de service Pb définitive soit obtenue et soit ensuite maintenue constante par expulsion de gaz inerte excédentaire, jusqu'à ce que la température de recuit Tt soit atteinte.

2. Procédé selon la revendication 1, caractérisé par le fait
que, après l'achèvement de l'imprégnation, la température d'imprégnation Ti est pour l'essentiel entretenue à l'intérieur de l'autoclave, et est augmentée jusqu'à la température de recuit Tt.

3. Procédé selon l'une des revendications précédentes, caractérisé par le fait
que de l'azote est de préférence insufflé à force dans l'autoclave, en tant que gaz inerte, en vue de la contrainte par une pression au cours de l'imprégnation et/ou du recuit.

4. Procédé selon l'une des revendications précédentes, caractérisé par le fait
que la pression interne de l'autoclave est surveillée en permanence, et un dépassement de la pression maximale Ph, respectivement d'une pression maximale de service Pb, préétablie et inférieure, est empêché par expulsion dosée de gaz inerte.

5. Procédé selon l'une des revendications précédentes, caractérisé par le fait
que la charge des gaz de processus, consistant en des parts de l'agent d'imprégnation vaporisées lors de l'imprégnation et du recuit, est séparée dans l'enchaînement du recuit, pour l'essentiel par condensation, avant que l'autoclave soit ouvert.
